# EUROPÄISCHE PATENTANMELDUNG

(11) **EP 1 813 414 A2**
(43) Veröffentlichungstag der Anmeldung: **01.08.2007**
(21) Anmeldenummer: 07001823.9
(22) Anmeldetag: 29.01.2007
(51) Int. Cl.: B29C 47/82, B29C 47/08

(54) **Heiz-und Kühlvorrichtung für einen Extruderzylinder**

(30) Priorität: 30.01.2006 AT 1302006
(71) Anmelder: "SMK" Metall-und Kunstoffwaren Gesellschaft m.b.H., 4400 Steyr (AT)
(72) Erfinder: Siebenhandl, Franz, 3351 Weistrach (AT)
(74) Vertreter: Ofner, Clemens

(57) **Zusammenfassung**

Die Erfindung beschreibt eine Heiz- und Kühlvorrichtung (1) für einen Extruderzylinder (2), mit einer an einem Zylindermantel (3) angeordneten, mit einem Kühlluftstrom beaufschlagbaren Kühlvorrichtung (4) und mit einem mit elektrischer Energie speisbaren Heizelement (7) aus Isolierkörpern (8) und mit zumindest einer die Isolierkörper (8) in Umfangsrichtung des Zylindermantels (3) querenden Heizwendel (20). Das Heizelement (7) und Kühlelemente der Kühlvorrichtung (4) sind mittels einer Spannvorrichtung (19) am Zylindermantel (3) gespannt. Die Spannvorrichtung (10) ist durch ein das Heizelement (7) umfassendes Spannband (11) gebildet, das an Längsseitenkanten (35), in Umfangsrichtung beabstandet angeordnete, die Isolierkörper (8) an in Axialrichtung des Zylindermantels entgegengesetzten Stirnflächen (53) zumindest bereichsweise überdeckende Positioniermittel (37) aufweist. An Endbereichen (34) sind am Spannband (11) u- förmige Umformungen (32, 33) zur Aufnahme endseitiger Isolierkörper (8) vorgesehen.

## Beschreibung

Die Erfindung betrifft eine Heiz- und Kühlvorrichtung, wie sie in den Oberbegriffen der Ansprüche 1 und 21 beschrieben ist.

Aus der EP 1 005 974 A1 ist eine Vorrichtung zum Heizen und Kühlen von Maschinenzylindem zur Kunststoffverarbeitung bekannt, wobei zu Rindbändern zusammengefügte Keramiksteine auf dem Maschinenzylinder aufliegend angeordnet sind. In Umfangsrichtung sind Elektro-Heizwendeln in fluchtenden Kanälen der Keramiksteine angeordnet. Die Keramiksteine sind weiters auf der vom Maschinenzylinder abgewandten Oberflächen mit rippenförmige Erhöhungen versehen die für eine Kühlung einem Kühlluftstrom aussetzbar sind. Befestigt werden die Keramiksteine in Umfangsrichtung auf dem Maschinenzylinder mittels Spannbänder die durch die Keramiksteine querende und fluchtende Durchbrüchen hindurch geführt sind.

Aufgabe der Erfindung ist es eine Heizvorrichtung als montagefertige Baueinheit zu schaffen, mit der der Fertigungs- und Montageaufwand reduziert wird.

Diese Aufgabe der Erfindung wird durch die im Kennzeichenteil des Anspruches 1 wiedergegebenen Merkmalen erreicht. Der überraschende Vorteil dabei ist, dass nach der gekennzeichneten Ausbildung die wesentlichen, die Heizvorrichtung ausbildenden Komponenten für Lagerung, Versand, wie auch für die Manipulation bei der Montage, bei der die Ringform um zumindest einen Durchmesser eines Zylindermantels zu öffnen ist, in gesicherter Lage zueinander positioniert sind und damit sonst erforderliche Aufwendungen für Lagerhaltung einzelner Teile, Versandabwicklung und Montage eingespart und Anwendungs- und Montagefehler vermieden werden.

Möglich ist dabei eine Ausbildung nach Anspruch 2, wodurch die Teilevielfalt, wie sie derzeit bekannte Heizvorrichtungen aufweisen, verringert wird.

Gemäß den vorteilhaften Weiterbildungen, wie in den Ansprüchen 3 bis 5 beschrieben, wird unabhängig von einer Gesamtlänge, die jeweils einem Außendurchmesser des Zylindermantels für den die Vorrichtung vorgesehen auszulegen ist und damit sehr unterschiedlich ist, die Positionierung der Komponenten zueinander gewährleistet.

Gemäß den in den Ansprüchen 6 bis 8 beschriebenen vorteilhaften Weiterbildungen, ist ein einfaches manuelles Festlegen der Komponenten zueinander gegeben.

Die im Anspruch 9 gekennzeichnete Ausbildung gewährleistet eine sichere Anlage des Heizelementes auf der Oberfläche des Zylindermantels und damit eine gesicherte Wärmeübertragung.

Vorteilhaft sind aber auch Ausbildungen nach den Ansprüchen 10 und 11, wodurch eine Längenverschiebung der Komponenten zueinander wirkungsvoll vermieden wird.

Die in den Ansprüchen 12 und 13 beschriebenen vorteilhaften Weiterbildungen gewährleisten eine einfache elektrische Kontaktierung des Heizelementes.

Durch die im Anspruch 14 gekennzeichnete vorteilhafte Ausbildung ist eine entsprechend hohe Biegeelastizität erreicht, wodurch der Montagevorgang vereinfacht wird.

Durch das im Anspruch 15 beschriebene Herstellungsverfahren kann auf die größenbedingten Variante kostengünstig, durch Einsparung von Fertigungswerkzeugen, reagiert werden.

Schließlich sind aber auch Ausbildungen nach den Ansprüchen 16 bis 20 vorteilhaft, weil damit die Montage der Heizwendel in den Isolierkörpern vereinfacht wird, da die Heizdrahtwendel in eine Aneinanderreihung der Isolierkörper in Folge der Einführschlitze eingepresst werden kann und ein aufwendiger Einfädelungsvorgang entfällt.

Die Erfindung betrifft aber auch eine Heiz- und Kühlvorrichtung mit einem Kühlelement, wie es im Anspruch 21 gekennzeichnet ist. Der überraschende Vorteil dabei ist, dass im Falle der erforderlichen Absenkung der Temperatur des Extruderzylinders und damit des in diesem geförderten Massenstrom durch die vom Kühlelement in einem Kühlluftstrom bewirkte Verwirbelung eine kurze Reaktionszeit erreicht wird.

Von Vorteil sind dabei Ausbildungen, wie in den Ansprüchen 22 bis 32 gekennzeichnet, die eine wirtschaftliche und damit kostengünstige Fertigung ermöglichen und ausreichend Varianten bieten, die an die jeweiligen konstruktiven Gegebenheiten an einem Extruder anpassbar sind und die Montage vereinfachen.

Zum besseren Verständnis der Erfindung wird diese anhand der in den Figuren dargestellten Ausführungsbeispiele näher erläutert.

Es zeigen:
- Fig. 1: die erfindungsgemäße Heiz- und Kühlvorrichtung auf einem Zylindermantel geschnitten gemäß den Linien I-I in Fig. 2;
- Fig. 2: die Heiz- und Kühlvorrichtung teilweise geschnitten gemäß den Linien II-II in Fig. 1;
- Fig. 3: ein Heizelement mit einer Spannvorrichtung, geschnitten;
- Fig. 4: eine Spannvorrichtung mit einem Spannband der erfindungsgemäßen Heiz- und Kühlvorrichtung;
- Fig. 5: die Spannvorrichtung in Seitenansicht;
- Fig. 6: eine andere Ausbildung der erfindungsgemäßen Heiz- und Kühlvorrichtung auf einem Zylindermantel, geschnitten gemäß den Linien VI-VI in Fig. 7;
- Fig. 7: die Heiz- und Kühlvorrichtung, geschnitten gemäß den Linien VII-VII in Fig. 6;
- Fig. 8: eine weitere Ausbildung der Kühlvorrichtung der erfindungsgemäßen Heiz- und Kühlvorrichtung, geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

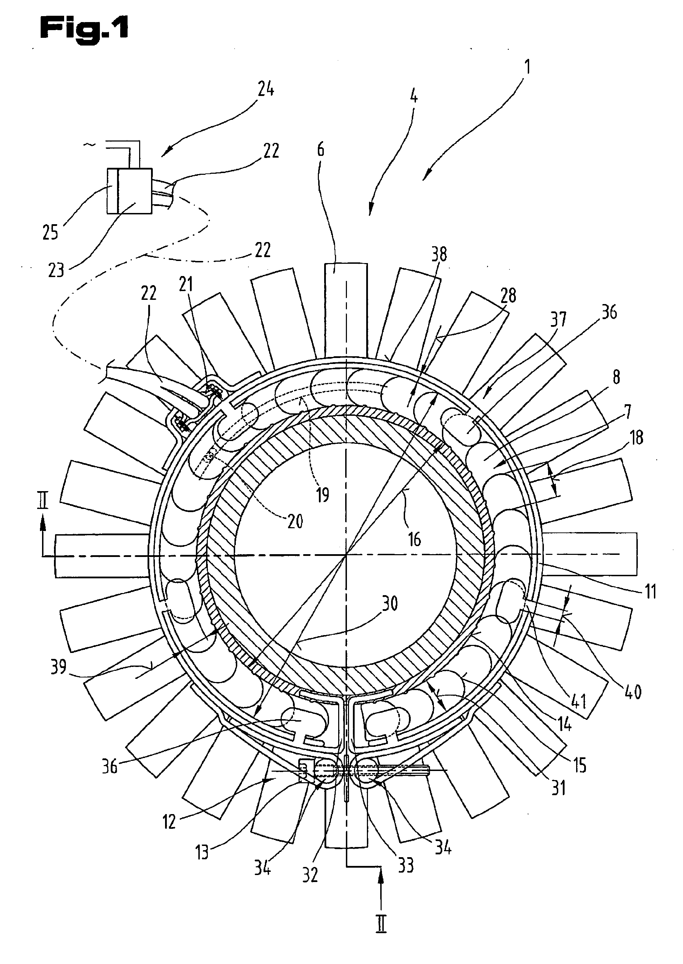

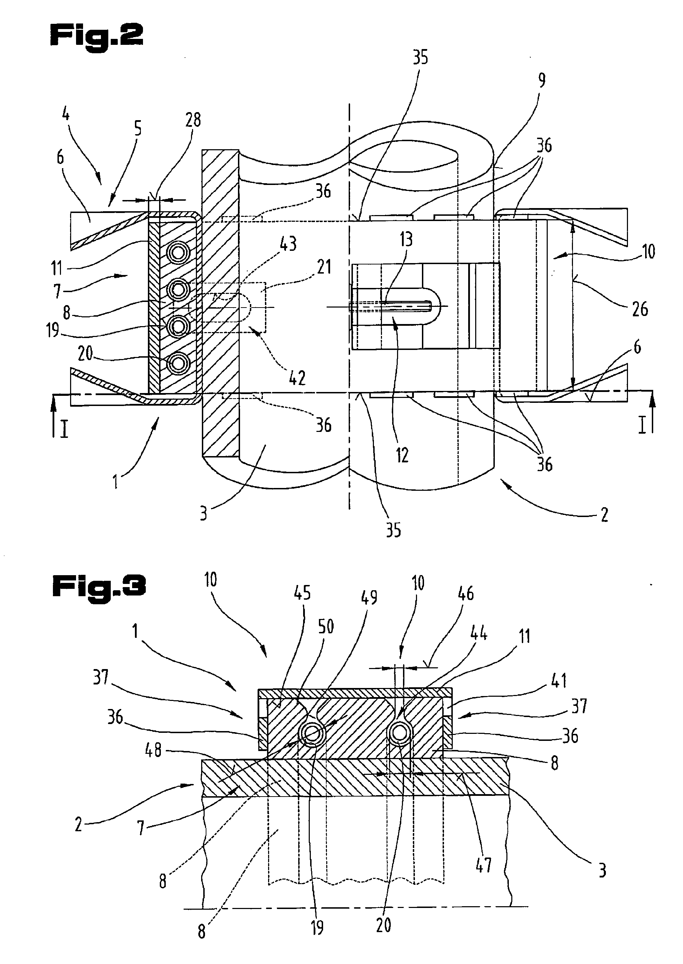

In den Fig. 1 und 2 ist eine Heiz- und Kühlvorrichtung 1, angeordnet auf einem Extruderzylinder 2, insbesondere einem Zylindermantel 3 für eine Kunststoffmasse, zur Herstellung extrudierter oder gespritzter Kunststoffartikel gezeigt, wobei auf eine Länge des Zylindermantels 3, bevorzugt mehrere gleichartige Heiz- und Kühlvorrichtungen 1 den Zylindermantel 3 in Umfangsrichtung umfassend, parallel zueinander verlaufend, angeordnet sind.

Wie weiter der Fig. 2 zu entnehmen, ist die Heizvorrichtung 1 kombinierbar mit einer Kühlvorrichtung 4, um eine Temperaturregelung in einem geringen Temperaturdifferenzbereich des Zylindermantels 3 zu erreichen, wesentlich für die Fertigungsqualität der Produkte. Die Kühlvorrichtung 4 ist beispielsweise ein im Querschnitt U-förmiges, kreisförmig gerolltes, mit einem Querschlitz offenes Profil, welches ein Kühlelement 5 bildet, wobei dieses auch durch Halbschalen gebildet sein kann. Es besteht aus einem gut wärmeleitfähigen Material und ist unmittelbar am Zylindermantel 3 angeordnet. Ein Basisschuh weist in radialer Richtung abstehende Kühlfahnen 6 auf, die von einem regelbaren Kühlluftstrom im Falle einer erforderlichen Wärmeabfuhr beaufschlagbar sind.

Ein Heizelement 7 ist bei einer derartigen Kombination unmittelbar auf den Halbschalen 5 aufgesetzt, kann jedoch aber selbstverständlich auch ohne der Kühlvorrichtung 4 unmittelbar auf dem Zylindermantel 3 angeordnet sein.

Das Heizelement 7 besteht im wesentlichen aus dem Zylindermantel 3 in Umfangsrichtung umfassende gliederbandförmig ausgebildete, stabförmige Isolierkörper 8, bevorzugt aus hitzebeständiger Keramik, und einer das Heizelement 7, entweder unter Zwischenschaltung der Halbschale 5 oder direkt auf eine Oberfläche 9 des Zylindermantels 2, festlegenden Spannvorrichtung 10. Diese besteht aus einem Spannband 11 mit zumindest einem Spannmittel 12, z.B. einer Spannschraube 13 oder Spannschnalle, etc.

Um eine möglichst spaltfreie Aneinanderreihung der Isolierkörper 8 um einen Außenumfang 14 des Zylindermantels 3 zu erreichen, sind aneinanderliegende Längsseitenflächen 15 gegengleich konkav/konvex geformt. Dies gewährleistet eine dichte Anlage der Isolierkörper 8 unabhängig von einem auszubildenden Innendurchmesser 16. Dieser ist anzupassen an einen Außendurchmesser 17 des Zylindermantels 3 bzw. der Halbschalen 5 der Kühlvorrichtung 4.

Die Isolierkörper 8 sind mit diese in Richtung einer Breite 18 querenden Bohrungen 19 versehen, in denen in bekannter Weise eine Heizwendel 20 aus elektrischem Widerstandsdraht angeordnet ist, die über ein Anschlusselement 21 und Leitungen 22 mit einem Schaltelement 23 und weiter mit einer Energiequelle 24 leitungsverbunden ist, wobei das Schaltelement 23 bevorzugt mit einer Temperaturregeleinrichtung 25 verbunden ist.

Das Spannband 11 der Spannvorrichtung 10, z.B. ein Blechstreifen mit einer Breite 26 entsprechend einer Länge 27 der Isolierkörper 8 und mit einer Dicke 28, etwa zwischen 0,5 mm und 1,5 mm, ist hinsichtlich einer Gesamtlänge 29 entsprechend dem Außendurchmesser 17 des Zylindermantels 2, an dem die Heizvorrichtung 1 vorgesehen ist, auszulegen und ergibt sich aufgrund des erforderlichen Außendurchmessers 30 aus dem Innendurchmesser 16 und einer zweifachen Dicke 31 der Isolierkörper 8. Zuzüglich ist eine Mehrlänge aufgrund von U-förmigen Umformungen 32, 33 an gegenüberliegenden Endbereichen 34, 35 des Spannbandes 11 zu berücksichtigen da bevorzugt endseitige Isolierkörper 8 an den einander zugewandten Stirnflächen 15 von den Umformungen 32, 33 ummantelt werden wodurch das Heizelement 7 an gegenüberliegenden Endbereichen 34 durch das Spannband 11 stabilisiert ist.

An Längsseitenkanten 35 weist das Spannband 11 in Umfangsrichtung beabstandet durch Biegelaschen 36 gebildete Positioniermittel 37 auf, welche mit dem Spannband 11 einstückig verbunden sind und bei der Fertigung des Spannbandes 11 in einer Ebene mit einer Oberfläche 38 des Spannbandes 11 ausgerichtet sind. Diese Biegelaschen 36 dienen zur seitlichen Halterung des Heizelementes 7 und werden nach Zusammenfügen des Heizelementes 7 und des Spannbandes 11 in zur Oberfläche 38 senkrechter Richtung abgewinkelt um die Isolierkörper 8 seitlich bereichsweise um eine Höhe 39 der Biegelaschen 36, die gering kleiner der Dicke 31 der Isolierkörper 8 ist, zu überlappen.

Eine Breite 40 eines Verbindungssteges 41, über den die Biegelaschen 36 mit dem Spannband 11 einstückig verbunden sind, entspricht in etwa der Dicke 28 des Spannbandes 11, wodurch ein werkzeugloses Abwinkeln der Biegelaschen zur Erzielung der seitlichen Positionierung des Heizelementes 7 im Spannband 11 ermöglicht wird.

Durch die Minimierung der Breite 40 der Verbindungsstege 41 auf etwa kleiner oder gleich der Dicke 28 des Spannbandes 11 bleibt die Biegeelastizität des Spannbandes 11 zur Einnahme des Kreisumfanges bei der Montage der Heizvorrichtung 1 auf dem Zylindermantel 2 uneingeschränkt erhalten.

In den Endbereichen 34 ist, wie bereits vorhergehend beschrieben, die Spannvorrichtung 12 mit zumindest einer Spannschraube 13 vorgesehen, mittels der die Heizvorrichtung 1, bestehend aus Heizelement 7 und dem Spannband 11, auf feste Anlage mit der Oberfläche 9 des Zylindermantels 2 gespannt ist, um die Wärmeübertragung durch Ausschaltung eines Zwischenraumes zwischen dem Heizelement 7 und der Oberfläche 9 des Zylindermantels 2 und damit einen hohen Wirkungsgrad der Heizvorrichtung 1 zu gewährleisten.

Im Bereich des Anschlusselementes 21 weist das Spannband 11 zur Durchführung der Leitungen 22, zur Anspeisung der Heizwendel 20 mit elektrischer Energie, einen Durchbruch 42, insbesondere ein Langloch 43, auf.

In der Fig. 3 ist eine weitere Ausführung der Isolierkörper 8 der erfindungsgemäßen Heizvorrichtung 1 gezeigt. Wie bereits vorhergehend beschrieben, besteht die Heizvorrichtung 1 aus dem Heizelement 7 mit den Isolierkörpern 8 und den in den Bohrungen 19 angeordneten Heizwendeln 20, wobei im gezeigten Ausführungsbeispiel die Heizvorrichtung 1 zwei derartiger Heizwendeln 20 aufweist.

Die Spannvorrichtung 10 besteht wie bereits in der vorhergehenden Beschreibung ausgeführt aus dem Spannband 11 mit den über die Stege 41 angeformten und im gezeigten Ausführungsbeispiel abgewinkelten Biegelaschen 36 zur seitlichen Positionierung des Heizelementes 7 in der Spannvorrichtung 10.

Wie der Fig. 3 weiter zu entnehmen ist, sind die die Heizwendeln 20 aufnehmenden Bohrungen 19 über Einführschlitze 44 mit einer Oberseite 45 der Isolierkörper 8 verbunden, wobei eine Schlitzweite 46 gering kleiner ist als ein Durchmesser 47 der Heizwendel 20. Ein Durchmesser 48 der Bohrung 19 ist gering größer einem Durchmesser 47 der Heizwendel 20 oder diesem etwa gleich.

Bevorzugt ist der Einführschlitz 44 in Richtung der Oberseite 45 konisch erweitert bzw. gerundet ausgebildet, wodurch das Einlegen und Einpressen der Heizwendel 20 durch die so ausgebildete Verengung erleichtert wird.

Diese Ausbildung der Isolierkörper 8 ermöglicht ein leichteres Bestücken mit den Heizwendeln 20 bzw. beschleunigt den Vorgang, und kann gegebenenfalls mit einer Vorrichtung automatisiert werden. Damit entfällt das übliche Einfädeln der Heizwendel 20 das bei größeren Gesamtlängen des Heizelementes 7 aufwendig ist.

Die Differenz zwischen dem Außendurchmesser 47 der Heizwendel 20 und der Schlitzweite 46 bewegt sich im Bereich der elastischen Verformbarkeit der Heizwendel 20, wodurch diese nach dem Einführen über den Einführschlitz 44 in die Bohrung 19 wieder die ursprüngliche Durchmesserform annimmt und damit gesichert in der Bohrung 19 gehaltert wird.

Wie weiters der Fig. 3 zu entnehmen, besteht darüber hinaus die Möglichkeit, eine hitzebeständige Isolierzwischenlage 50 zwischen den Isolierkörpern 8 und dem Spannband 11 vorzusehen wodurch eine elektrische Isolierung erreicht und das Eindringen z.B. von Zunder wirkungsvoll verhindert wird.

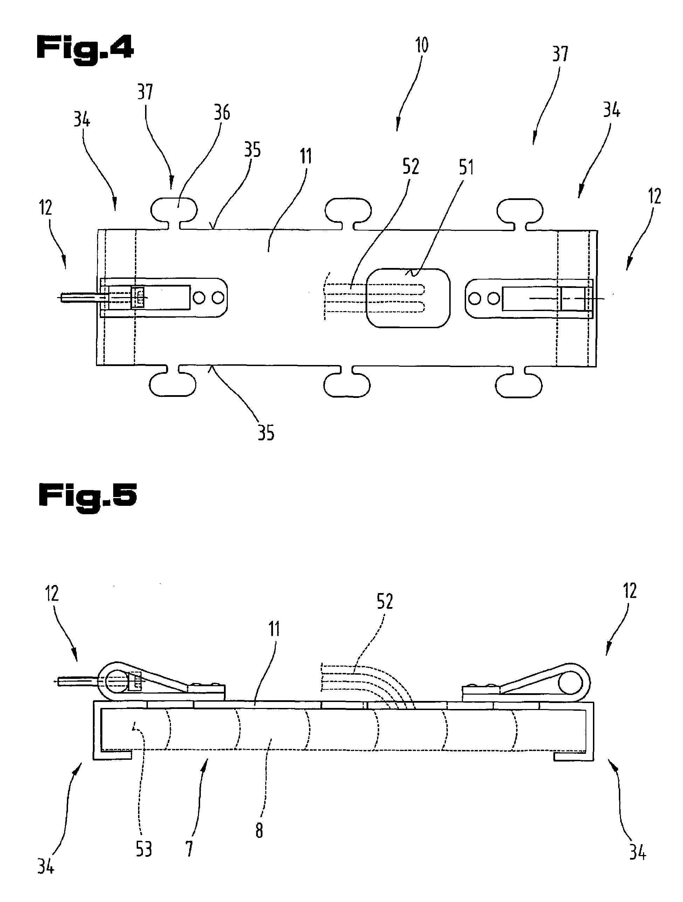

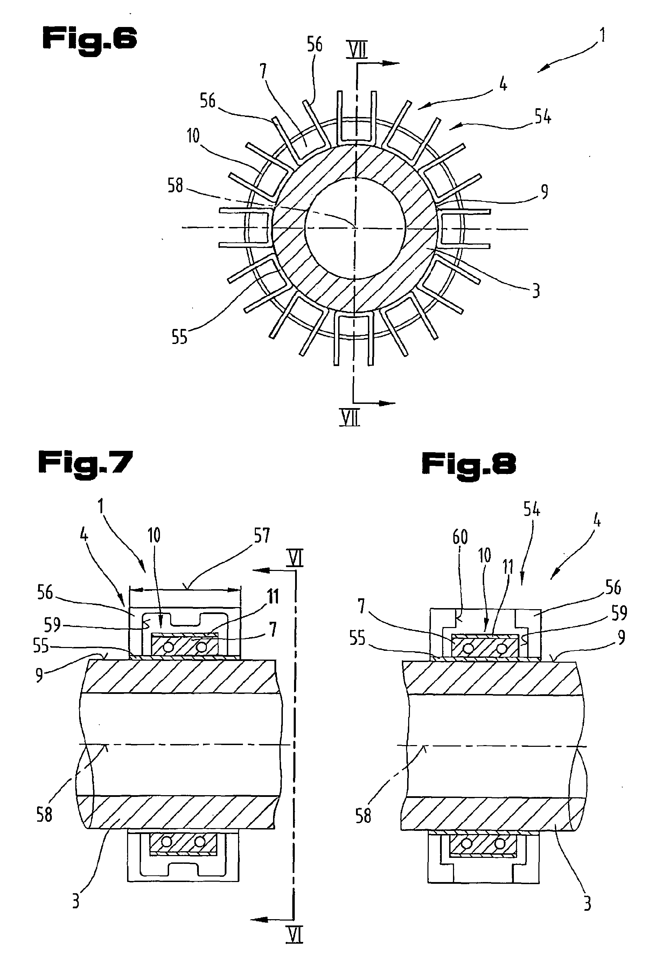

In den Fig. 4 und 5 ist im Detail die Spannvorrichtung 10 mit dem Spannband in gestreckter Ausrichtung gezeigt. In unterbrochenen Linien ist das Heizelement 7, bestehend aus den aneinander gereihten Isolierkörpern 8 und mit den aus einem Durchbruch 51 herausgeführten Anschlussleitungen 52, zur Versorgung der Heizwendel 20 mit elektrischer Energie, gezeigt. In den Endbereichen 34 weist das Spannband 11 U-förmige Abwinkelung zur Umfassung der Isolierkörper 8 auf. Weiters sind in den Endbereichen 34 Elemente für die Spannmittel 12 am Spannband 11 befestigt, z.B. Aufgenietet, Verlötet, Verschweißt, etc. Wie weiters gezeigt, sind an den Längsseitenkanten 35 des Spannbandes 11 die einstückig angeformten Positioniermittel 37, ausgebildet als die Biegelaschen 36, in der Ebene des Spannbandes 11 verlaufend gezeigt, die nach dem Einlegen des Heizelementes 7 durch Abbiegen an Stirnflächen 53 der Isolierkörper 8 angelegt werden und damit das Heizelement seitlich im Spannband 11 positionieren. Das Spannband 11 ist bevorzugt aus Blech mit einer Dicke zwischen 0,25 mm bis 1,0 mm gefertigt und ist beispielsweise ein Stanzteil, wie es aber auch durch ein Wasserstrahl- oder Leserstrahlschneideverfahren herstellbar ist. Die dargestellte Form der Biegelaschen 36 ist nur beispielhaft, da auch andere Formen durchaus möglich sind.

In den Fig. 6 und 7 ist eine andere Ausbildung der Heiz- und Kühlvorrichtung 1 gezeigt. Nach dieser Ausbildung sind am Zylindermantel 2 in Umfangsrichtung aneinandergereiht, voneinander unabhängige, durch U-Profile 54 gebildete Kühleelemente 4 angeordnet, die mit einem Basisschenkel 55 auf der Oberfläche 9 des Zylindermantels 2 aufliegen. In etwa parallel verlaufende Schenkel 56 ragen in etwa in radialer Richtung von der Oberfläche 9 ab, wobei sie sich die Schenkel 56 mit einer Breite 57 etwa in einer, eine Längsmittelachse 58 des Zylindermantels 2 aufnehmenden Ebene erstrecken, In den Schenkeln, 56 sind formgleiche Ausnehmungen 59 vorgesehen, durch die das Heizelement 7 und die Spannvorrichtung 10 hindurchgeführt ist. Damit werden die U-Profile 54 mit den Basisschenkeln 55 am Zylindermantel 2 dicht anliegend gespannt. Die gezeigte Ausbildung der Ausnehmung 59 ist nur beispielhaft zu sehen, da unterschiedliche Varianten möglich sind, um beispielsweise durch eine geförderte Verwirbelung eines Kühlluftstromes eine hohe Wärmeabfuhrleistung zu erreichen. Andererseits ist es zweckmäßig, die Form der Ausnehmung 59 im Sinne einer guten Positionierung und Halterung der Kühlelemente 4 am Heizelement 7 und der Spannvorrichtung 10 für eine vereinfachte Montage zu erreichen.

In der Fig. 8 ist eine weitere Ausbildung der U-Profile 54 als mögliches Kühlelement 4 gezeigt. Die dargestellte Ausnehmung 59 in den Schenkeln 55, 66, die das Heizelement 7 und Spannband 11 der Spannvorrichtung 10 aufnimmt, geht in radialer Richtung in einen Schlitz 16 über. Eine derartige Ausbildung in den Schenkeln 56 ist beispielsweise im Bereich der Anschlussleitungen des Heizelements 7 für eine vereinfachte Montage zweckmäßig. Selbstverständlich ist es aber auch möglich, sämtliche, am Zylindermantel 3 angeordnete Kühlelemente 4 nach dieser gezeigten Ausbildung auszuführen.

Die Ausführungsbeispiele zeigen mögliche Ausführungsvarianten der Heizvorrichtung wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Heizvorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2; 3; 4, 5; 6, 7 und 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Heiz- und Kühlvorrichtung
- 2: Extruderzylinder
- 3: Zylindermantel
- 4: Kühlvorrichtung
- 5: Kühlelement

- 6: Kühlfahne
- 7: Heizelement
- 8: Isolierkörper
- 9: Oberfläche
- 10: Spannvorrichtung

- 11: Spannband
- 12: Spannmittel
- 13: Spannschraube
- 14: Außenumfang
- 15: Längsseitenflächen

- 16: Innendurchmesser
- 17: Außendurchmesser
- 18: Breite
- 19: Bohrung
- 20: Heizwendel

- 21: Anschlusselement
- 22: Leitung
- 23: Schaltelement
- 24: Energiequelle
- 25: Temperaturregeleinrichtung

- 26: Breite
- 27: Länge
- 28: Dicke
- 29: Gesamtlänge
- 30: Außendurchmesser

- 31: Dicke
- 32: Umformung
- 33: Umformung
- 34: Endbereich
- 35: Längsseitenkante

- 36: Biegelaschen
- 37: Positioniermittel
- 38: Oberfläche
- 39: Höhe
- 40: Breite

- 41: Verbindungsstege
- 42: Durchbruch
- 43: Langloch
- 44: Einführschlitz
- 45: Oberseite

- 46: Schlitzweite
- 47: Durchmesser
- 48: Durchmesser
- 49: Kante
- 50: Isolierzwischenlage

- 51: Durchbruch
- 52: Anschlussleitung
- 53: Stirnfläche
- 54: U-Profil
- 55: Basisschenkel

- 56: Schenkel
- 57: Breite
- 58: Längsmittelachse
- 59: Ausnehmung
- 60: Schlitz

## Patentansprüche

1. Heiz- und Kühlvorrichtung (1) für einen Extruderzylinder (2), mit einer an einem Zylindermantel (3) angeordneten, mit einem Kühlluftstrom beaufschlagbaren Kühlvorrichtung (4) und mit einem mit elektrischer Energie speisbaren Heizelement (7) aus Isolierkörpern (8) und mit zumindest einer die Isolierkörper (8) in Umfangsrichtung des Zylindermantels (3) querenden Heizwendel (20) und mit einer das Heizelement (7) und die Kühlvorrichtung (4) umfassenden und diese am Zylindermantel (3) festlegenden Spannvorrichtung (10), **dadurch gekennzeichnet, dass** die Spannvorrichtung (10) durch ein das Heizelement (7) umfassendes Spannband (11) gebildet ist, das an Längsseitenkanten (35) in Umfangsrichtung beabstandet angeordnete, die Isolierkörper (8) an in Axialrichtung des Zylindermantels entgegengesetzten Stirnflächen (53) zumindest bereichsweise überdeckende Positioniermittel (37) aufweist und an Endbereichen (34) des Spannbandes (11) u- förmige Umformungen (32, 33) zur Aufnahme endseitiger Isolierkörper (8) ausgebildet sind.

2. Heiz- und Kühlvorrichtung (1) nach Anspruch 1, **dadurch gekennzeichnet, dass** die Positioniermittel (37) durch mit dem Spannband (11) einstückig verbundene, zu einer Oberfläche (38) des Spannbandes (11) in Richtung der Stirnflächen (53) der Isolierkörper (8) abgewinkelte, Biegelaschen (36) gebildet sind.

3. Heiz- und Kühlvorrichtung (1) nach Anspruch 1 oder 2, **dadurch gekennzeichnet, dass** eine Breite (26) des Spannbandes (11) bzw. eine lichte Weite zwischen den gegenüber angeordneten Positioniermitteln (37) einer Länge des Isolierkörpers (8) entspricht.

4. Heiz- und Kühlvorrichtung (1) nach einem der vorhergehenden Ansprüche, **dadurch gekennzeichnet, dass** ein in Umfangsrichtung gemessener Abstand zwischen den Positioniermitteln (37) größer ist als eine Breite (18) des Isolierkörpers (8).

5. Heiz- und Kühlvorrichtung (1) nach einem der vorhergehenden Ansprüche, **dadurch gekennzeichnet, dass** über eine Länge des Spannbandes (11) zwischen zwei und zwanzig der Positioniermitteln (37) angeordnet sind.

6. Heiz- und Kühlvorrichtung (1) nach einem der vorhergehenden Ansprüche, **dadurch gekennzeichnet, dass** die Positioniermittel (37) mit dem Spannband (11) über Verbindungsstege (41) verbunden sind.

7. Heiz- und Kühlvorrichtung (1) nach einem der vorhergehenden Ansprüche, **dadurch gekennzeichnet, dass** eine Dicke des Verbindungssteges (41) einer Dicke (28) des Spannbandes (11) entspricht.

8. Heiz- und Kühlvorrichtung (1) nach einem der vorhergehenden Ansprüche, **dadurch gekennzeichnet, dass** eine Breite (40) des Verbindungssteges (41) etwa der Dicke (88) entspricht.

9. Heiz- und Kühlvorrichtung (1) nach einem der vorhergehenden Ansprüche, **dadurch gekennzeichnet, dass** eine zur Oberfläche (38) des Spannbandes (11) senkrecht verlaufende Höhe (39) der Biegelaschen (36) gering kleiner ist als eine Dicke (31) der Isolierkörper (8).

10. Heiz- und Kühlvorrichtung (1) nach einem der vorhergehenden Ansprüche, **dadurch gekennzeichnet, dass** die u- förmige Umformung (32, 33) am Endbereich (34) bevorzugt über eine gesamte Breite (26) des Spannbandes (11) ausgebildet ist.

11. Heiz- und Kühlvorrichtung (1) nach einem der vorhergehenden Ansprüche, **dadurch gekennzeichnet, dass** eine Innenhöhe der u- förmigen Umformung (32, 33) gleich oder gering größer ist als die Dicke (31) des Isolierkörpers (8).

12. Heiz- und Kühlvorrichtung (1) nach einem der vorhergehenden Ansprüche, **dadurch gekennzeichnet, dass** das Spannband (11) mit einem Durchbruch (42, 51) für Anschlussleitungen (52) der Heizwendel (20) versehen ist.

13. Heiz- und Kühlvorrichtung (1) nach einem der vorhergehenden Ansprüche, **dadurch gekennzeichnet, dass** der Durchbruch (42, 51) als Langloch (43) ausgebildet ist.

14. Heiz- und Kühlvorrichtung (1) nach einem der vorhergehenden Ansprüche, **dadurch gekennzeichnet, dass** das Spannband (11) aus Eisenblech mit einer Dicke (28) von etwa 0,2 mm bis 1,0 mm gebildet ist.

15. Heiz- und Kühlvorrichtung (1) nach einem der vorhergehenden Ansprüche, **dadurch gekennzeichnet, dass** das Spannband (11) mit den Positioniermitteln (37) durch einen Umfangskonturschnitt, insbesondere durch einen Laserstrahlschneidevorgang gefertigt ist.

16. Heiz- und Kühlvorrichtung (1) nach einem der vorhergehenden Ansprüche, **dadurch gekennzeichnet, dass** die den Isolierkörper (8) querende Bohrung (19) zur Aufnahme der Heizwendel (20) über einen Einführschlitz (44) mit einer Oberseite (45) des Isolierkörpers (8) verbunden ist.

17. Heiz- und Kühlvorrichtung (1) nach einem der vorhergehenden Ansprüche, **dadurch gekennzeichnet, dass** ein Durchmesser (48) der Bohrung (19) etwa einem Durchmesser (47) der Heizwendel (20) entspricht.

18. Heiz- und Kühlvorrichtung (1) nach einem der vorhergehenden Ansprüche, **dadurch gekennzeichnet, dass** eine Schlitzweite (46) gering kleiner ist als der Durchmesser (47) der Heizwendel (20).

19. Heiz- und Kühlvorrichtung (1) nach einem der vorhergehenden Ansprüche, **dadurch gekennzeichnet, dass** der Einführschlitz (44) in Richtung der Oberseite (45) konisch erweitert ausgebildet ist.

20. Heiz- und Kühlvorrichtung (1) nach einem der vorhergehenden Ansprüche, **dadurch gekennzeichnet, dass** eine durch die Oberseite (45) und dem Einführschlitz (44) gebildete Kante (49) gerundet ausgebildet ist.

21. Heiz- und Kühlvorrichtung (1) für einen Extruderzylinder (2), mit einer an einem Zylindermantel (3) angeordneten, mit einem Kühlluftstrom beaufschlagbaren Kühlvorrichtung (4) und mit einem mit elektrischer Energie speisbaren Heizelement (7) aus Isolierkörpern (8) und mit zumindest einer die Isolierkörper (8) in Umfangsrichtung des Zylindermantels (3) querenden Heizwendel (20) und mit einer das Heizelement (7) und die Kühlvorrichtung (4) umfassenden und diese am Zylindermantel (3) festlegenden Spannvorrichtung (10), **dadurch gekennzeichnet, dass** die Kühlvorrichtung (4) durch zumindest ein den Zylindermantel (3) in Umfangsrichtung umfassendes U- Profil (54) gebildet ist das mit einem Basisschenkel (55) am Zylindermantel (3) formschlüssig anliegt.

22. Heiz- und Kühlvorrichtung (1) nach Anspruch 21, **dadurch gekennzeichnet, dass** Schenkeln (56) des U- Profils (54) in zu einer Längsmittelachse (58) des Zylindermantels (3) etwa senkrecht verlaufenden Ebenen ausgerichtet sind.

23. Heiz- und Kühlvorrichtung (1) nach Anspruch 21, **dadurch gekennzeichnet, dass** die Schenkel (56) in zur Längsmittelachse (58) parallel verlaufenden Ebenen ausgerichtet sind.

24. Heiz- und Kühlvorrichtung (1) nach Anspruch 21, **dadurch gekennzeichnet, dass** das U- Profil (54) durch zwei den Zylindermantel (3) umfassende Halbschalen gebildet ist.

25. Heiz- und Kühlvorrichtung (1) nach Anspruch 21 oder 22, **dadurch gekennzeichnet, dass** zwischen den Schenkeln (56) das Heizelement (7) und dieses umfassend die Spannvorrichtung (4) angeordnet ist.

26. Heiz- und Kühlvorrichtung (1) nach einem der Ansprüche 21 bis 23, **dadurch gekennzeichnet, dass** die Schenkeln (56) durch über eine gesamte Höhe erstreckende in radialer Richtung verlaufende Trennfugen in etwa gleich breite Kühlfahnen (6) unterteilt sind.

27. Heiz- und Kühlvorrichtung (1) nach Anspruch 26, **dadurch gekennzeichnet, dass** die Kühlfahnen (6) in zu der Höhe senkrecht verlaufenden Richtung gewölbt geformt sind.

28. Heiz- und Kühlvorrichtung (1) nach Anspruch 26 oder 27, **dadurch gekennzeichnet, dass** einander benachbarte Kühlfahnen (6) mit gegengleicher Wölbung versehen sind.

29. Heiz- und Kühlvorrichtung (1) nach einem der Ansprüche 21 bis 28, **dadurch gekennzeichnet, dass** im Schenkel (56) eine Ausnehmung (59) für das Heizelement (7) angeordnet ist.

30. Heiz- und Kühlvorrichtung (1) nach einem der Ansprüche 21 bis 29, **dadurch gekennzeichnet, dass** im Schenkel (56) zumindest ein sich über die Höhe erstreckender Schlitz (60) angeordnet ist.

31. Heiz- und Kühlvorrichtung (1) nach einem der Ansprüche 21 bis 30, **dadurch gekennzeichnet, dass** der Basisschenkel (55) des U- Profils (54) gewölbt ausgebildet ist.

32. Heiz- und Kühlvorrichtung (1) nach einem der Ansprüche 21 bis 31, **dadurch gekennzeichnet, dass** die Kühlvorrichtung (4) aus temperaturbeständigen, eine hohe Wärmeleitfähigkeit aufweisendem Material z.B. Cu, Al, Edelstahl etc. gebildet ist.
